# EUROPÄISCHE PATENTSCHRIFT

(11) **EP 2 528 710 B1**
(45) Veröffentlichungstag und Bekanntmachung des Hinweises auf die Patenterteilung: **06.06.2018**
(21) Anmeldenummer: 11705149.0
(22) Anmeldetag: 28.01.2011
(51) Int. Cl.: B23P 6/00, B23K 37/00, F01D 5/00, B64F 5/00, B23K 26/32, F01D 5/14, F01D 5/28

(54) **REPARATURVERFAHREN FÜR EIN VERBUNDBAUTEIL FÜR EIN LUFTFAHRZEUG**
REPAIR METHOD FOR A COMPOSITE COMPONENT FOR AN AIRCRAFT
PROCÉDÉ DE RÉPARATION D'UN ÉLÉMENT COMPOSITE D'UN AÉRONEF

(30) Priorität: 29.01.2010 DE 102010006384
(43) Veröffentlichungstag der Anmeldung: 05.12.2012
(73) Patentinhaber: Lufthansa Technik AG, 22335 Hamburg (DE)
(72) Erfinder: CZERNER, Stefan, 22767 Hamburg (DE)
(74) Vertreter: Müller Verweyen
(86) Internationale Anmeldenummer: PCT/EP2011/000375
(87) Internationale Veröffentlichungsnummer: WO 2011/092019

(56) Entgegenhaltungen:
- EP-A1- 0 764 764
- EP-A1- 1 302 562
- DE-A1-102006 057 641
- DE-A1-102006 061 915
- JP-A- H10 180 442
- JP-A- 2001 041 002
- US-A- 5 306 120
- US-A- 5 951 254
- US-A1- 2004 121 182
- US-A1- 2008 271 876

## Beschreibung

Die Erfindung betrifft ein Reparaturverfahren für ein Verbundbauteil für ein Luftfahrzeug mit den Merkmalen des Oberbegriffs von Anspruch 1. Verbundbauteile werden in Luftfahrzeugen bevorzugt dann verwendet, wenn die Teile eine hohe Festigkeit bei einem geringen Eigengewicht aufweisen sollen. Dies sind z.B. Teile der Flügel, Teile des Rumpfes und insbesondere die Schaufeln in den Luftfahrzeugantrieben.
Schaufeln für Luftfahrzeugantriebe weisen z.B. einen leichten aber hochfesten Grundkörper aus einem Faserverbundwerkstoff, wie z.B. einem kohlenstofffaserverstärkten Kunststoff (CFK) oder einem faserverstärkten Metall (CMC), und einen den Grundkörper der Schaufel zumindest an der Strömungseintrittsseite abdeckenden Metallbeschlag aus einem hochfesten Metall, wie z.B. einer Titanlegierung, auf. Der Grundkörper aus dem Faserverbundwerkstoff bietet den Vorteil, dass er eine sehr hohe Festigkeit bei einem sehr geringen Eigengewicht aufweist, während der Metallbeschlag eine sehr harte Oberfläche aufweist und die Aufgabe hat, die Erosionsbeständigkeit und die Schlagfestigkeit der Schaufel gegenüber auftreffenden Fremdkörpern, wie z.B. Vögeln, zu erhöhen.
Eine solche Schaufel ist z.B. aus der DE 10 2006 061 915 A1 bekannt.
Die Metallbeschläge an den Schaufeln unterliegen während des Betriebes des Flugzeugtriebwerkes einem nicht zu vermeidenden Verschleiß und müssen deshalb bei der Wartung des Flugzeugtriebwerkes in regelmäßigen Abständen ausgetauscht werden. Dazu müssen die Metallbeschläge von dem Grundkörper abgelöst und durch neue oder reparierte Metallbeschläge ersetzt werden. Sowohl das Ablösen des zu ersetzenden Metallbeschlages als auch die Verbindung des neuen Metallbeschlages mit dem Grundkörper sind dabei aufgrund der hohen Anforderungen an die Verbindung mit einem hohen Aufwand und Kosten verbunden. Des Weiteren setzt dieses Reparaturverfahren voraus, dass identische Austauschmetallbeschläge zur Verfügung stehen, so dass eine derartige Wartung nur an bestimmten Orten durchgeführt werden kann oder einen entsprechenden logistischen Aufwand voraussetzt.

Gleiches gilt für Verbundbauteile in Verwendung als Teile der Flügel oder des Rumpfes, wobei in diesem Fall an dem Grundkörper aus dem Faserverbundwerkstoff Metallteile zur Verbindung des Verbundbauteiles mit benachbarten Teilen oder auch zur Erhöhung der Eigensteifigkeit vorgesehen sind.

Ferner sind aus den Druckschriften US 5,306,120, US 2008/0271876 A1 und EP 764 764 A1 jeweils Laufschaufeln von Flugzeugtriebwerken bekannt, welche durch eine spezielle Ausbildung der Oberfläche eine erhöhte Verschleißbeständigkeit aufweisen sollen. Dabei ist es insbesondere aus der US 2008/0271876 A1 bekannt, die Laufschaufel im Bereich von Schadstellen wieder aufzuarbeiten und dabei zu kühlen.

Aufgabe der Erfindung ist es, ein kostengünstiges mit möglichst wenig Aufwand verbundenes Reparaturverfahren für ein Verbundbauteil für ein Luftfahrzeug, ein kostengünstig repariertes Verbundbauteil für ein Luftfahrzeug sowie eine Einrichtung, mittels derer ein Verbundbauteil für ein Luftfahrzeug kostengünstig repariert werden kann, zu schaffen.

Zur Lösung der Aufgabe wird ein Reparaturverfahren nach Anspruch 1 vorgeschlagen. Weitere bevorzugte Ausführungsformen der Erfindung sind den Unteransprüchen, den Figuren sowie der zugehörigen Beschreibung zu entnehmen.

Gemäß Anspruch 1 wird zur Lösung der Aufgabe ein Reparaturverfahren für ein Verbundbauteil für ein Luftfahrzeug mit einem Grundkörper aus einem Faserverbundwerkstoff und einem mit dem Grundkörper verbundenen Metallteil vorgeschlagen, wobei das Metallteil und der Grundkörper während der Reparatur eine bauliche Einheit bilden und bei dem Maßnahmen vorgesehen sind, damit die Temperatur im Bereich der Verbindung des Metallteils mit dem Grundkörper einen vorbestimmten Wert nicht überschreitet, und auf das Metallteil zusätzliches Material unter thermischer Energiezufuhr aufgetragen wird. Der besondere Vorteil der Erfindung ist darin zu sehen, dass das Metallteil für die Reparatur nicht von dem Grundkörper getrennt werden muss. Die Reparatur des Verbundbauteils erfolgt dabei dadurch, indem zusätzliches Material auf das Metallteil unter Zufuhr von thermischer Energie aufgebracht wird. Die thermische Energie ermöglicht dabei ein Verschmelzen des aufgebrachten Materials mit dem Metallteil zu einem vergrößerten Metallteil, wobei durch das aufgebrachte Material z.B. Erosionsstellen wieder aufgefüllt werden können. Die thermische Energie wird dabei mit einer Prozesstemperatur von ca. 2000 Grad Celsius in das Verbundbauteil eingebracht. Da das Auftragsschweißen über eine längere Zeitdauer erfolgt, wird dabei eine sehr hohe thermische Energie in das Verbundbauteil eingebracht. Damit die Verbindung zwischen dem Grundkörper und dem Metallteil durch die dabei in das Verbundbauteil eingebrachte thermische Energie nicht aufgehoben oder beschädigt wird, werden gleichzeitig Maßnahmen getroffen, durch die verhindert wird, dass eine vorbestimmte Temperatur im Bereich der Verbindung zwischen dem Grundkörper und dem Metallteil überschritten wird.

Weiter wird erfindungsgemäß vorgeschlagen, dass in dem Grundkörper und/oder dem Metallteil wenigstens ein Temperatursensor vorgesehen ist, mit dem die Temperatur im Bereich der Verbindung des Metallteils mit dem Grundkörper während des Auftragens des Materials gemessen wird. Durch die Verwendung eines Temperatursensors zur Messung der Temperatur im Bereich der Verbindung des Metallteiles und des Grundkörpers kann durch eine online Überwachung sichergestellt werden, dass die Temperatur in jedem Fall auch während des Auftragens des Materials die vorbestimmte Temperatur nicht überschreitet.

Alternativ oder zusätzlich kann erfindungsgemäß die Temperatur des Verbundbauteils auch mit einer externen Einrichtung berührungslos gemessen werden. Solche berührungslos arbeitenden Einrichtungen wären z.B. Wärmebildkameras, Pyrometer oder Quotientenpyrometer. Der Vorteil solcher berührungslos arbeitender Einrichtungen besteht darin, dass das Verbundbauteil dadurch selbst nicht verändert werden muss bzw. das Reparaturverfahren dadurch auch bei beliebigen nicht für das Reparaturverfahren speziell vorbereiteten Verbundbauteilen angewendet werden kann. Ferner kann der Temperaturmessort dadurch auch während des Reparierens des Verbundbauteiles verändert werden.
Diese Maßnahmen können beispielsweise die weiter unten beschriebenen Kühleinrichtungen umfassen. Darüber hinaus können die Maßnahmen, wie im Folgenden näher erläutert, auch die Wahl bestimmter Prozessparameter umfassen. Das erfindungsgemäße Verfahren wird bevorzugt für verschiedene Bauteiltypen, beispielsweise verschiedene Gasturbinenschaufeltypen und/oder - geometrien speziell angepasst. Zu Testzwecken und/oder in einem Zulassungsverfahren wird das erfindungsgemäße Verfahren hierfür an einem bestimmten Bauteiltyp durchgeführt und gleichzeitig über einen, beispielsweise durch Bohrlöcher eingeführten Temperatursensor die Temperatur im Verbundbauteil und/oder an der Grenzschicht zwischen Grundkörper und Metallteil bei verschiedenen Prozessparametern überwacht. Durch diese Vorgehensweise können die Prozessparameter, wie beispielsweise Schweißparameter beim Auftragsschweißen bestimmt werden, bei denen die Temperatur im Bauteil bzw. an der Grenzschicht zwischen Grundkörper und Metallteil 200°C, bevorzugt 80°C, nicht überschreitet.

Für eine erfindungsgemäße Reparatur an diesem bestimmten Bauteiltyp umfassen die Maßnahmen während des Reparaturverfahrens dann das Nutzen der durch das Test- bzw. Zulassungsverfahren gewonnenen Erkenntnisse, insbesondere das Beachten von bestimmten Schweißparametern.

Zusätzlich umfassen die Maßnahmen bevorzugt auch das Überwachen der Oberflächentemperatur des Metallteils bei Ermittelung der Prozessparameter bzw. im Reparaturverfahren. Die Abhängigkeit zwischen Oberflächentemperatur und der Temperatur im Verbundbauteil bzw. in der Grenzschicht zwischen Grundkörper und Metallteil kann dadurch gezielt genutzt werden, um einen zu hohen und für das Verbundbauteil schädlichen Wärmeeintrag zu vermeiden. Über die Messung der Oberflächentemperatur kann so unter Zuhilfenahme der gewonnenen Erfahrungswerte auf die Temperatur im Bauteil bzw. in der Grenzschicht zwischen Grundkörper und Metallteil geschlossen werden und damit über eine Überwachung der Oberflächentemperatur auch indirekt die Temperatur im Verbundbauteil überwacht werden.

Dies hat den Vorteil, dass auf Temperatursensoren im zu reparierenden Bauteil nachfolgend verzichtet werden kann, oder unaufwendigere externe Sensoren, wie Pyrometer oder Kontaktthermometer eingesetzt werden können.

Vorzugsweise erfolgt die thermische Energiezufuhr während des erfindungsgemäßen Reparaturverfahrens in einem Zeitfenster von weniger als 5 min, vorzugsweise weniger als 1 min. Ein solches kurzes Zeitfenster ermöglicht schnelle Prozesszeiten und darüber hinaus wird wenig thermische Energie in das Bauteil eingeleitet.

Vorzugsweise bleiben der Grundkörper und das Metallteil während des erfindungsgemäßen Verfahrens verbunden. Ferner ist das zusätzlich auf das Metallteil aufgebrachte Material vorzugsweise metallisch. Bevorzugt wird ein im Wesentlichen artgleiches Material aufgebracht.

Das Verbundbauteil muss für das vorgeschlagene Reparaturverfahren nicht aufwendig zerlegt und anschließend wieder zusammengefügt werden, so dass das Reparaturverfahren sehr kostengünstig ist. Außerdem ist für das Reparaturverfahren kein identisches Austauschmetallteil erforderlich, so dass die Reparatur praktisch an jedem beliebigen Wartungsstandort durchgeführt werden kann, vorausgesetzt es ist eine Einrichtung zum Auftragen des Materials vorhanden, und es kann sichergestellt werden, dass die Temperatur nicht die vorbestimmte Temperatur überschreitet. Bevorzugte Verfahren zum Auftragen des Materials sind z.B. Elektronenstrahl-Auftragsschweißen, Laserstrahl-Auftragsschweißen, Kaltgasspritzen oder auch Reibschweißen. Ferner ist es möglich, durch das Reparaturverfahren auch Verbundbauteile zu reparieren, bei denen das Metallteil nicht oder nur durch eine teilweise Beschädigung des Grundkörpers von diesem getrennt werden kann.

Der Wert der vorbestimmten Temperatur sollte 70 bis 200 Grad Celsius, vorzugsweise 80 Grad Celsius, betragen, damit an dem Grundkörper bzw. an der Grenzfläche zwischen dem Grundkörper und dem Metallteil keine wärmebedingte Schädigung auftritt.

Insbesondere ist es sinnvoll, wenn das Auftragen des Materials auch in Abhängigkeit von der Temperatur des Verbundbauteils gesteuert wird. Die durch das Auftragen des Materials eingebrachte thermische Energie ist die Ursache für die Temperaturerhöhung an der Verbindungsfläche zwischen dem Metallteil und dem Grundkörper, so dass das Überschreiten der vorbestimmten Temperatur auch durch das Verringern der Auftragsrate des Materials verhindert werden kann. Im Extremfall kann das Auftragen des Materials auch kurzzeitig unterbrochen werden.

Ferner kann das Verbundbauteil während des Auftragens des Materials mittels einer Kühleinrichtung gekühlt werden, so dass die Temperatur in dem Verbundbauteil auch durch eine gezielte Wärmeabfuhr aktiv gesenkt werden kann.

Solch eine Kühleinrichtung kann z.B. durch einen oder mehrere von einem Kühlmedium durchströmte Kühlkanäle in dem Grundkörper und/oder dem Metallteil oder durch wenigstens eine externe auf das Verbundbauteil gerichtete Kühlfläche gebildet sein. Eine Kühleinrichtung mit Kühlkanälen ermöglicht eine sehr hohe und gezielt gerichtete innere Wärmeabfuhr, während durch die Verwendung externer Kühlflächen keine konstruktiven Veränderungen an den Verbundbauteilen vorgenommen werden müssen.

Dabei kann die Kühleinrichtung in Abhängigkeit von der Temperatur des Verbundbauteils gesteuert werden, indem sie z.B. nur bei einem Überschreiten einer vordefinierten unterhalb der vorbestimmten Temperatur liegenden Grenztemperatur aktiviert wird. Für den Fall, dass die vordefinierte Temperatur nicht überschritten wird, ist eine Wärmeabfuhr über die Kühleinrichtung nicht erforderlich, und es kann die zum Betrieb der Kühleinrichtung erforderliche Energie gespart werden.

Insbesondere kann die Kühleinrichtung derart angeordnet sein, dass der erzeugte Wärmestrom in dem Verbundbauteil von dem Grundkörper des Verbundbauteils weg gerichtet ist. Durch die vorgeschlagene Anordnung der Kühleinrichtung und die damit verbundene Führung des Wärmestromes wird die Temperaturbelastung des Grundkörpers weiter verringert.

Eine weitere bevorzugte Ausführungsform der Erfindung ist darin zu sehen, dass die Temperatur in dem Verbundbauteil vor dem Auftragen des Materials computerunterstützt berechnet wird, und das Auftragen des Materials und/oder die Kühleinrichtung in Abhängigkeit von der berechneten Temperatur gesteuert wird. In Kenntnis der Temperaturverteilung ist es z.B. möglich durch Messung an einem anderen Ort des Grundkörpers oder des Metallteiles auf die Temperatur an der Grenzfläche zwischen dem Grundkörper und dem Metallteil zu schließen. Außerdem kann durch eine solche Berechnung im Vorwege ermittelt werden, unter welchen Umständen überhaupt die vorbestimmte Temperatur überschritten wird. Für den Fall, dass eine solche Berechnung ergibt, dass die vorbestimmte Temperatur an der Grenzfläche zu keinem Zeitpunkt des Materialauftragens überschritten wird, z.B. aufgrund einer großen Wandstärke des Metallteiles, kann auf eine Kühlung des Verbundbauteiles während des Reparaturverfahrens auch ganz verzichtet werden.

Weiter wird vorgeschlagen, dass das aufgetragene Material von der Oberfläche des Metallteils in einem nachfolgenden Arbeitsgang zur Schaffung einer vorgegebenen Oberflächenkontur des Verbundbauteils teilweise wieder abgetragen wird. Das Material wird dadurch bewusst dicker aufgetragen, wobei die Oberflächenkontur und die weiteren Oberflächeneigenschaften eben erst durch eine Nachbearbeitung verwirklicht werden.

Nachfolgend wird die Erfindung anhand eines bevorzugten Ausführungsbeispiels näher erläutert. In den Figuren sind im Einzelnen zu erkennen:
- Fig.1:: Eine als Verbundbauteil ausgebildete Schaufel eines Flugzeugantriebes;
- Fig.2:: Schaufel aus Fig.1 in der Ansicht in Schnittrichtung B-B mit einem Metallbeschlag mit darauf durch Auftragsschweißen aufgetragenem Material;
- Fig.3:: Schaufel aus Fig.1 in der Ansicht in Schnittrichtung B-B mit einem Metallbeschlag mit einem angeschweißten Ausbesserungsstück;
- Fig.4:: Einrichtung zur Reparatur einer Schaufel;
- Fig.5:: Rumpfsektion eines Luftfahrzeuges ausgebildet als Verbundbauteil mit einem auf dem Metallteil aufgebrachten zusätzlichen Material.

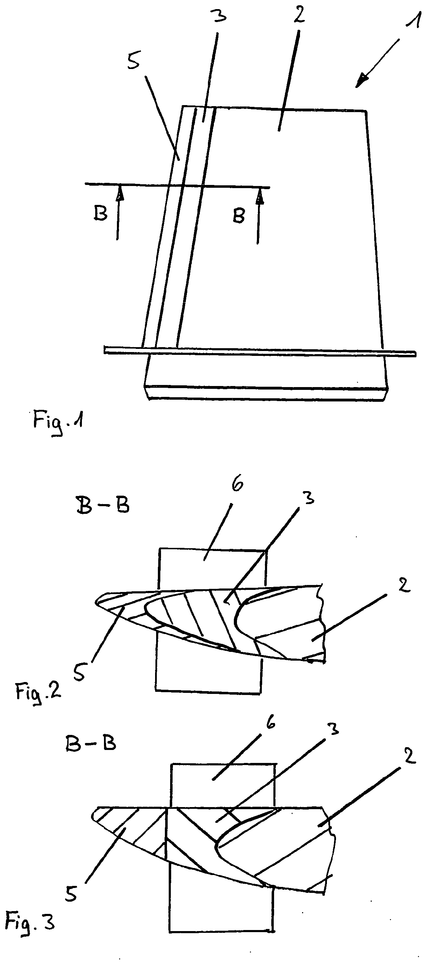

In der Fig.1 ist ein Verbundbauteil 1 in Form einer Schaufel für einen Flugzeugantrieb zu erkennen. Die Schaufel weist einen Grundkörper 2 aus einem Faserverbundwerkstoff, wie z.B. einem kohlenstofffaserverstärkten Kunststoff (CFK) oder einem faserverstärkten Metall (CMC), auf und ist an der Strömungseinrittsseite mit einem Metallteil 3 versehen, durch den verhindert wird, dass der Grundkörper 2 durch Erosion oder plötzliche Schläge beschädigt wird. Das Metallteil 3 ist als Metallbeschlag ausgebildet und weist eine sehr hohe Erosionsbeständigkeit auf, ein möglicher Werkstoff für das Metallteil 3 ist in diesem Fall eine Titanlegierung.

Ferner ist, wie auch in den Schnittdarstellungen in den Figuren 2 und 3 zu erkennen ist, auf der Oberfläche des Metallteiles 3 eine zusätzliche Menge an Material 5 aufgebracht. Durch das aufgebrachte Material 5 wurde die durch Erosion beschädigte Oberfläche des Metallbeschlages 3 ausgebessert. In der Fig.2 ist das zusätzlich aufgebrachte Material 5 durch ein Materialauftragsverfahren, wie z.B. Laserauftragsschweißen, Elektronenstrahlauftragsschweißen, Kaltgasspritzen oder Reibschweißen, aufgetragen. Das Material 5 wird dabei unter Zufuhr von einer sehr hohen Energie aufgetragen, so dass das Material 5 mit dem Werkstoff der Oberfläche des Metallteiles 3 verschmilzt und dadurch ein homogenes um das Material 5 ergänztes Metallteil 3 gebildet wird. Der Werkstoff des aufgetragenen Materials 5 kann dabei identisch zu dem Werkstoff des Metallteiles 3 sein.

In der Fig.3 ist das aufgetragene Material 5 durch ein separates mit dem Metallteil 3 verbundenes Austauschteil in Form eines vorgeformten Rohlings gebildet. Das Material 5 wurde ebenfalls durch Hinzufügen von thermischer Energie mit dem Metallteil 3 verbunden, indem das Austauschteil angeschweißt wurde, wobei das Material 5 mit dem Metallteil 3 zumindest an der Grenzfläche zu einem homogenen Teil verschmilzt.

Sowohl das aufgetragene Material 5 in der Fig.2 als auch das Material 5 in der Figur 3 kann nach dem Auftragen einer Nachbearbeitung zur Schaffung der endgültigen Oberfläche unterzogen werden. Ferner kann es sinnvoll sein, das Verbundbauteil nach der Bearbeitung einer Wärmebehandlung zum Ausgleich von inneren Werkstoffspannungen zu unterziehen.

Ferner ist sowohl in der Fig.2 als auch in der Fig.3 eine Kühleinrichtung 6 zu erkennen, mittels derer die durch das Auftragen des Materials 5 in das Verbundbauteil 1, insbesondere in das Metallteil 3, eingebrachte Wärme wieder abgeführt wird, so dass die Temperatur des Verbundbauteils 1 im Bereich der Grenzfläche zwischen dem Grundkörper 2 und dem Metallteil 3 einen vorbestimmten Wert von 70 bis 200 Grad Celsius, vorzugsweise von 80 Grad Celsius, nicht übersteigt und die Verbindung zwischen dem Grundkörper 2 und dem Metallteil 3 durch die Wärme nicht beschädigt wird.

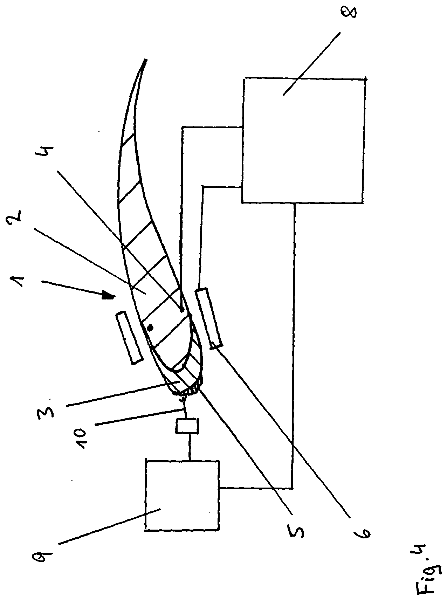

In der Fig.4 ist eine Einrichtung zu erkennen, mittels derer das vorgeschlagene Reparaturverfahren durchführbar ist. Die Schaufel ist in der Einrichtung ortsfest eingespannt, wobei es auch denkbar wäre, die Reparatur an einer an dem Flugzeugantrieb montierten Schaufel "on-wing" durchzuführen. Seitlich der Schaufel, dem Übergangsbereich zwischen dem Grundkörper 2 und dem Metallteil 3 gegenüberliegend ist eine Kühleinrichtung 6 in Form von auf die Schaufel gerichteten Kühlflächen vorgesehen. Die Kühlflächen befinden sich in einer festen räumlichen Zuordnung zu der Schaufel, so dass die Wärme gezielt von einem Bereich der Oberfläche der Schaufel abgeführt wird, welcher möglichst nahe der Grenzfläche zwischen dem Grundkörper 2 und dem Metallteil 3 und/oder zwischen dem Metallteil 3 und dem zusätzlich aufgetragenen Material 5 angeordnet ist. Ferner ist eine Einrichtung 9 zum Auftragen des zusätzlichen Materials 5 mittels einer Schweißelektrode 10 vorgesehen. Die beim Auftragen des Materials 5 in das Verbundbauteil 1 eingebrachte thermische Energie wird durch die Kühleinrichtung 6 gezielt wieder abgeführt, so dass ein Lösen bzw. Delaminieren der Verbindung zwischen dem Metallteil 3 und dem Grundkörper 2 durch ein Aufschmelzen des Metallteils 3 oder des Grundkörpers 2 im Bereich der Verbindung verhindert wird. In der Schaufel sind im Bereich der Grenzfläche zwischen dem Grundkörper 2 und dem Metallteil 3 ein oder mehrere Temperatursensoren 4 vorgesehen, mit denen die Temperatur des Verbundbauteils 1 möglichst nahe der Verbindung zwischen dem Metallteil 3 und dem Grundkörper gemessen wird. Das Signal der Temperatursensoren 4 wird einer Steuereinrichtung 8 zugeführt, welche ebenfalls signaltechnisch mit der Kühleinrichtung 6 und der Einrichtung 9 zum Aufbringen des Materials 5 verbunden ist. Durch die Steuereinrichtung 8 kann sowohl die Kühleinrichtung 6 als auch die Einrichtung 9 in Abhängigkeit von der von den Temperatursensoren 4 sensierten Temperatur gesteuert werden.

Alternativ kann die Temperatur in dem Verbundbauteil 1 auch vor der Reparatur computerunterstützt simuliert werden, so dass die Temperaturen bzw. die Temperaturverteilung beim Auftragen des Materials 5 bekannt sind. Für den Fall, dass die Berechnung der Temperatur ergibt, dass eine vorgegebene Temperatur, welche zu einem Lösen der Verbindung führen könnte, nicht überschritten wird, kann eine Wärmeabfuhr über die Kühleinrichtung 6 auch gänzlich entfallen. Dies kann z.B. dadurch begründet sein, dass die Wandstärke des Metallteiles 3 ausreichend groß ist, oder die Menge des aufzutragenden Materials 5 so gering ist, dass der damit verbundene Eintrag an thermischer Energie in das Verbundbauteil 1 nicht zu einem Überschreiten der vorbestimmten Temperatur an der Grenzfläche führt. Ferner ist es möglich, durch die bekannte Temperaturverteilung auch bei einer Anordnung der Temperatursensoren 4 an einer von der Grenzfläche entfernteren Stelle durch eine Umrechnung die Temperatur an der Grenzfläche zumindest theoretisch genau zu ermitteln.

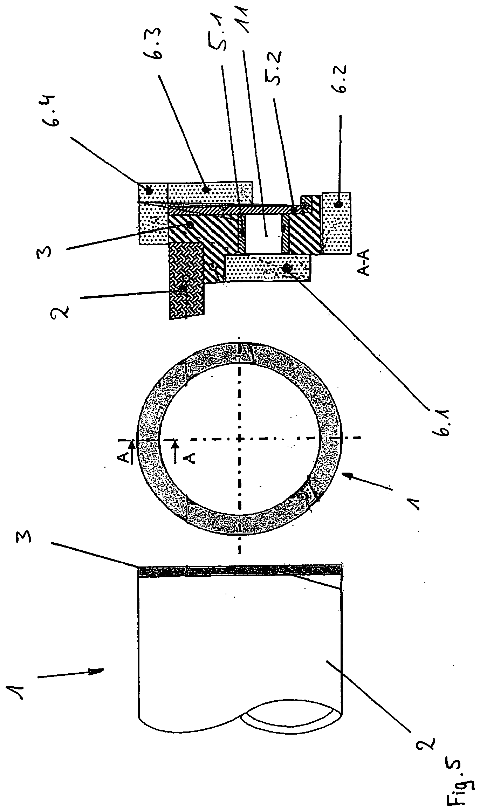

In der Figur 5 ist ein alternatives Ausführungsbeispiel dargestellt, bei dem das Verbundbauteil 1 durch eine Rumpfsektion eines Luftfahrzeuges gebildet ist. Die Rumpfsektion ist aus einem Grundkörper 2 aus einem Faserverbundwerkstoff der bereits oben beschriebenen Art und einem Metallteil 3 in Form eines stirnseitig an den Grundkörper 2 angesetzten Metallflansches gebildet. Der Metallflansch ist, wie in der Schnittdarstellung A-A zu erkennen ist, mit einer Befestigungsöffnung 11 versehen, mittels derer die Rumpfsektion mit einem benachbarten Bauteil verbunden werden kann. An dem Metallteil 3 sind je nach der Art der Schädigung verschiedene Flächen vorgesehen, auf denen jeweils Material 5 aufgebracht wurde. So ist z.B. ein Abschnitt 5.2 an der Stirnseite des Metallteiles 3 oder auch ein Abschnitt 5.1 in der Bohrung 11 zu erkennen, auf die Material 5 aufgebracht wurde, um Verschleißstellen auszubessern. Ferner sind verschiedene Kühlflächen 6.1,6.2,6.3 oder 6.4 zu erkennen, welche einer nicht dargestellten Kühleinrichtung 6 zugeordnet sind. Die Wirkung der Kühlflächen 6.1,6.2,6.3 und 6.4 entspricht der Wirkung der Kühleinrichtung 6 aus der Figur 4. Die Kühlflächen 6.1,6.2,6.3 und 6.4 sind bewusst so angeordnet, dass der durch die Kühlflächen 6.1,6.2,,6.3 und 6.4 erzeugte Wärmestrom in dem Verbundbauteil 1 nicht durch den Grundkörper 2 verläuft, und der Grundkörper 2 dadurch so wenig wie möglich erwärmt wird.

Alternativ kann die Kühleinrichtung 6 in den in den Figuren 4 und 5 dargestellten Ausführungsbeispielen auch durch in dem Metallteil 3 und/oder in dem Grundkörper 2 vorgesehene Kühlkanäle gebildet sein, welche durch ein Kühlmedium durchströmt werden, so dass das Verbundbauteil 1 von innen gekühlt wird.

## Patentansprüche

1. Reparaturverfahren für ein Verbundbauteil (1) für ein Luftfahrzeug mit einem Grundkörper (2) aus einem Faserverbundwerkstoff und einem mit dem Grundkörper (2) verbundenen Metallteil (3), **dadurch gekennzeichnet, dass** das Metallteil (3) und der Grundkörper (2) während der Reparatur eine bauliche Einheit bilden, wobei Maßnahmen vorgesehen sind, damit die Temperatur im Bereich der Verbindung des Metallteils (3) mit dem Grundkörper (2) einen vorbestimmten Wert nicht überschreitet, und wobei auf das Metallteil (3) zusätzliches Material (5) unter thermischer Energiezufuhr aufgetragen wird, wobei in dem Grundkörper (2) und/oder dem Metallteil (3) wenigstens ein Temperatursensor (4) vorgesehen ist, mit dem die Temperatur im Bereich der Verbindung des Metallteils (3) mit dem Grundkörper (2) während des Auftragens des Materials (5) an wenigstens einem Bauteil gemessen wird und/oder die Temperatur des Verbundbauteils (1) mit einer externen Einrichtung berührungslos gemessen wird.

2. Reparaturverfahren nach Anspruch 1, **dadurch gekennzeichnet, dass** der Wert der vorbestimmten Temperatur 70 bis 200 Grad Celsius, vorzugsweise 80 Grad Celsius, beträgt.

3. Reparaturverfahren nach einem der vorangegangenen Ansprüche, **dadurch gekennzeichnet, dass** das Auftragen des Materials (5) in Abhängigkeit von der Temperatur des Verbundbauteils (1) gesteuert wird.

4. Reparaturverfahren nach einem der vorangegangenen Ansprüche, **dadurch gekennzeichnet, dass** das Verbundbauteil (1) während des Auftragens des Materials (5) mittels einer Kühleinrichtung (6) gekühlt wird.

5. Reparaturverfahren nach Anspruch 4, **dadurch gekennzeichnet, dass** die Kühleinrichtung (6) durch einen oder mehrere von einem Kühlmedium durchströmte Kühlkanäle in dem Grundkörper (2) und/oder dem Metallteil (3) oder durch wenigstens eine externe auf das Verbundbauteil (1) gerichtete Kühlfläche gebildet ist.

6. Reparaturverfahren nach einem der Ansprüche 4 oder 5, **dadurch gekennzeichnet, dass** die Kühleinrichtung (6) in Abhängigkeit von der Temperatur des Verbundbauteils (1) gesteuert wird.

7. Reparaturverfahren nach einem der Ansprüche 3 bis 6, **dadurch gekennzeichnet, dass** die Kühleinrichtung (6) derart angeordnet ist, dass der erzeugte Wärmestrom in dem Verbundbauteil (1) von dem Grundkörper (2) des Verbundbauteils (1) weg gerichtet ist.

8. Reparaturverfahren nach einem der vorangegangenen Ansprüche, **dadurch gekennzeichnet, dass** die Temperatur in dem Verbundbauteil (1) vor dem Auftragen des Materials (5) computerunterstützt berechnet wird, und das Auftragen des Materials (5) und/oder die Kühleinrichtung (6) abhängig von der berechneten Temperatur gesteuert wird.

## Claims

1. Repair method for a composite component (1) for an aircraft, which composite component comprises a base body (2) formed from a fibrous composite material and a metal part (3) connected to the base body (2), **characterized in that** the metal part (3) and the base body (2) form a structural unit during the repair, wherein arrangements are made so that the temperature in the area where the metal part (3) is connected to the base body (2) does not exceed a predetermined value, and wherein auxiliary material (5) is applied to the metal part (3) while thermal energy is supplied, wherein at least one temperature sensor (4) is provided in the base body (2) and/or the metal part (3), by which temperature sensor the temperature is measured on at least one component in the area where the metal part (3) is connected to the base body (2) during the application of the material (5) and/or the temperature of the composite component (1) is measured by an external apparatus in a non-contacting manner.

2. Repair method according to claim 1, **characterized in that** the value of the predetermined temperature is 70 to 200 degrees Celsius, preferably 80 degrees Celsius.

3. Repair method according to any one of the preceding claims, **characterized in that** the application of the material (5) is controlled depending on the temperature of the composite component (1).

4. Repair method according to any one of the preceding claims, **characterized in that** the composite component (1) is cooled by means of a cooling device (6) during the application of the material (5).

5. Repair method according to claim 4, **characterized in that** the cooling device (6) is formed by one or more cooling ducts in the base body (2) and/or the metal part (3), which cooling ducts are flown through by a cooling fluid, or by at least one external cooling surface directed towards the composite component (1).

6. Repair method according to one of the claims 4 or 5, **characterized in that** the cooling device (6) is controlled depending on the temperature of the composite component (1) .

7. Repair method according to one of the claims 3 to 6, **characterized in that** the cooling device (6) is arranged in such a way that the generated flow of heat in the composite component (1) is directed away from the base body (2) of the composite component (1).

8. Repair method according to any one of the preceding claims, **characterized in that** the temperature in the composite component (1) is calculated in a computer-assisted manner prior to the application of the material (5), and that the application of the material (5) and/or the cooling device (6) is controlled depending on the calculated temperature.

## Revendications

1. Procédé de réparation pour un composant composite (1) pour un avion, comportant un corps de base (2) constitué d'un matériau composite à fibre et une partie métallique (3) reliée au corps de base (2), **caractérisé en ce que** la partie métallique (3) et le corps de base (2) forment une unité de structure pendant la réparation, dans lequel des mesures sont ménagées afin que la température au niveau de la liaison de la partie métallique (3) avec le corps de base (2) ne dépasse pas une valeur prédéterminée, et dans lequel de la matière supplémentaire (5) est appliquée sur la partie métallique (3) sous apport d'énergie thermique, dans lequel au moins un capteur de température (4) est ménagé dans le corps de base (2) et/ou dans la partie métallique (3), à l'aide duquel la température au niveau de la liaison de la partie métallique (3) avec le corps de base (2) est mesurée sur au moins un composant pendant l'application de la matière (5) et/ou dans lequel la température du composant composite (1) est mesurée sans contact à l'aide d'un moyen externe.

2. Procédé de réparation selon la revendication 1, **caractérisé en ce que** la valeur de la température prédéterminée est de 70 à 200 degrés Celsius, de préférence 80 degrés Celsius.

3. Procédé de réparation selon l'une quelconque des revendications précédentes, **caractérisé en ce que** l'application de la matière (5) est commandée en fonction de la température du composant composite (1).

4. Procédé de réparation selon l'une quelconque des revendications précédentes, **caractérisé en ce que** le composant composite (1) est refroidi pendant l'application du matériau (5) au moyen d'un moyen de refroidissement (6).

5. Procédé de réparation selon la revendication 4, **caractérisé en ce que** le dispositif de refroidissement (6) est formé par un ou plusieurs canaux de refroidissement traversés par un fluide caloporteur, disposés dans le corps de base (2) et/ou dans la partie métallique (3), ou par au moins une surface de refroidissement externe dirigée sur le composant composite (1).

6. Procédé de réparation selon l'une quelconque des revendications 4 ou 5, **caractérisé en ce que** le dispositif de refroidissement (6) est commandé en fonction de la température du composant composite (1).

7. Procédé de réparation selon l'une quelconque des revendications 3 à 6, **caractérisé en ce que** le dispositif de refroidissement (6) est disposé de manière à ce que le flux thermique généré dans le composant composite (1) soit dirigé en s'éloignant du corps de base (2) du composant composite (1).

8. Procédé de réparation selon l'une quelconque des revendications précédentes, **caractérisé en ce que** la température dans le composant composite (1) avant l'application du matériau (5) est calculée de manière assistée par ordinateur et **en ce que** l'application du matériau (5) et/ou le dispositif de refroidissement (6) sont commandés en fonction de la température calculée.
